# EUROPEAN PATENT APPLICATION

(11) **EP 1 827 031 A2**
(43) Date of publication of application: **29.08.2007**
(21) Application number: 07101157.1
(22) Date of filing: 25.01.2007
(51) Int. Cl.: H04N 9/31

(54) **Light source performing scanning operation twice, image apparatus using the light source, and method of driving the light source**

(30) Priority: 25.02.2006 KR 20060018523
(71) Applicant: Samsung Electronics Co., Ltd., Suwon-si 442-742 Gyeonggi-Do (KR)
(72) Inventor: Lee, Kye-hoon, 848-203 Byuckheokgol, 8-danji, Gyeonggi-do, Suwon-si (KR); Cho, Kun-ho, Gyeonggi-do, Suwon-si (KR)
(74) Representative: Waddington, Richard

(57) **Abstract**

A light source (61) and an image apparatus which can reduce a rainbow effect and a color separation phenomenon in a pixel are provided. A different waveform is provided according to a color of the light source (61) and methods of driving the light source (61) and the image apparatus, respectively. The light source (61) outputs beams of one or two colors from among three primary colors in a corresponding pixel section (43/44) of a first scan section (41), in two scan sections (41,42) for generating an entire image composed of a plurality of pixel images, to generate each pixel image and outputs a beam or beams of the remaining color or colors among the three primary colors in a corresponding pixel section (43/44) of a second scan section (42). The image apparatus includes a light source (61), an optical modulation device (63) receiving beams from the light source (61) and modulating the received beam into image components, a reflector (64) receiving the image components from the optical modulation device (63) and scanning the received image components onto a screen (68), and a control unit (55) controlling the light source (61) to output beams of one or two colors among three primary colors in a corresponding pixel section (43/44) of a first scan section (41) and output a beam or beams of the remaining color or colors among the three primary colors in a corresponding pixel section (43/44) of a second scan section (42), wherein the first scan section (41) and the second scan section (42) are for generating an entire image composed of a plurality of pixel images.

## Description

The present invention relates to a light source, an image apparatus using the light source, and a method of driving the light source. More particularly, the present invention relates to a light source which performs a scanning operation twice to generate an entire image of a screen, an image apparatus using the light source, and a method of driving the light source.

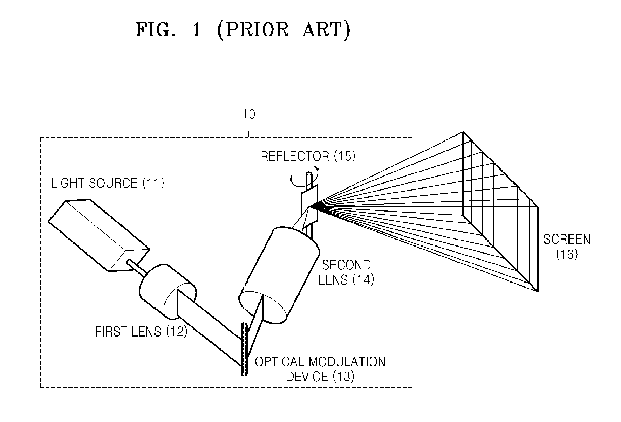

FIG. 1 illustrates the configuration of a conventional laser image apparatus 10. Referring to FIG. 1, the conventional image apparatus 10 includes a light source 11, a first lens 12 to transform a beam output from the light source 11 so that the beam is uniformly irradiated to an optical modulation device 13. The optical modulation device 13 modulates the irradiated beam into an image signal. The conventional image apparatus 10 also comprises a second lens 14 to diffuse the modulated image signal, and a reflector 15 to reflect the diffused image signal and to scan the reflected image signal to a screen 16. In this case, scanning denotes dividing an entire image line by line and sequentially displaying line images from one end of a line to the other at corresponding positions on the screen 16 at regular time intervals.

An image may be created using three optical modulation devices, for three primary colors of light - red, green and blue (RGB) - in a time division manner. However, when an image is created using one optical modulation device, an output from a light source is also required to be created in a time division manner.

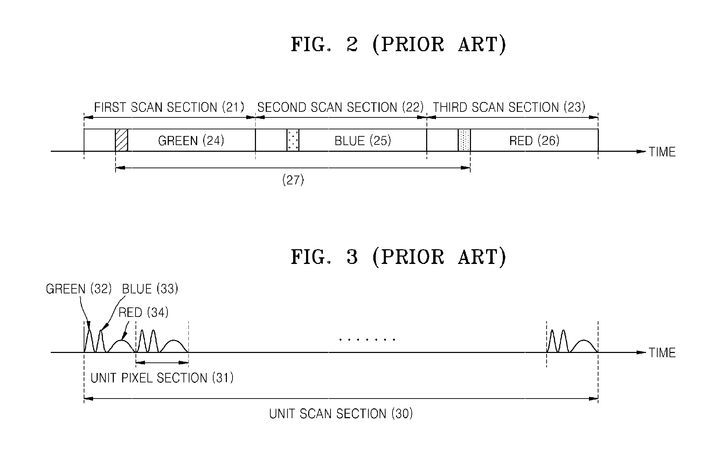

Conventional output methods include a time division method and a space division method. In the time division method, a beam is output using one color per scan section as illustrated in FIG. 2. Three fast scans are performed so that three colors are presented as one image on a screen due to a visual afterimage effect. In the space division method, three colors are used for one scan section as illustrated in FIG. 3 and only one scan is required to represent an image on a screen. A scan section denotes a signal section in which a screen is scanned once from one end of the screen to the other.

In the case of the time division method, as indicated by a shaded area in FIG. 2, signals for the three primary colors, which are required to create a pixel on a screen, are scanned onto the screen at an interval 27 corresponding to twice the total unit scan section. Therefore, when a user quickly moves his eyes from side to side, a color breakup or a rainbow effect is created since the three colors appear to be spread out, similar to a rainbow, instead of being synthesized. The breakup or rainbow effect causes a deterioration of the image quality.

According to the space division method (U.S. Patent No. 6,753,931), as illustrated in FIG. 3, green, blue and red beams 32, 33 and 34 are sequentially output in a unit pixel section 31 and continuous scanning is performed. Therefore, a color separation phenomenon in which a pixel is represented in three separate colors in space becomes more apparent as the screen becomes larger. A unit pixel section denotes a signal section required to create a pixel image corresponding to a pixel in a unit scan section. Since the red beam 34 can output a lower maximum instantaneous power than other color beams, a scan time for the red beam 34 should be longer than the scan times for other color beams in order to produce equal brightness. In this case, the color separation phenomenon in a pixel becomes more apparent.

Accordingly, there is a need for an improved system and method to reduce a rainbow effect and a chromatic aberration phenomenon, to increase a scan time of a beam, and to reduce a dimming effect in each area of image.

An object of the present invention is to address at least the above problems and/or disadvantages and to provide at least the advantages described below.

The present invention provides a method and apparatus for driving a light source in which a scanning operation is performed twice to create an image on a screen. This reduces a rainbow effect and a chromatic aberration phenomenon, increases a scan time of a particular beam without increasing a color separation phenomenon in a pixel, and reduces a dimming effect in each area of an image.

According to the present invention there is provided an apparatus and method as set forth in the appended claims. Preferred features of the invention will be apparent from the dependent claims, and the description which follows.

According to an aspect of the present invention, a method of outputting beams from a light source is provided. Beams are output in two scan sections to generate an entire image composed of a plurality of pixel images. Preferably beams of one or two colors among three primary colors are output in a corresponding pixel section of a first scan section and a beam or beams of the remaining color or colors among the three primary colors are output in a corresponding pixel section of a second scan section to generate each pixel image.

A red beam may be output in one of the two pixel sections.

The intensity of the beams may vary according to each pixel section.

According to another aspect of an exemplary embodiment of the present invention, a light source for outputting beams of three primary colors is provided. The light source comprises a first color beam output unit, a second color beam output unit, a third color beam output unit, a mixture output unit and a control unit. Preferably the mixture output unit is operable to combine beams output respectively from the first through third color beam output units into one combined beam and to output the combined beam. Preferably the control unit is operable to control the first through third color beam output units and the mixture output unit to output beams of one or two colors among the three primary colors in a corresponding pixel section of a first scan section and to output a beam or beams of the remaining color or colors among the three primary colors in a corresponding pixel section of a second scan section to generate each pixel image in two scan sections for generating an entire image composed of a plurality of pixel images.

The mixture output unit may comprise a switch device for selecting one of the first through third color beam output units.

According to another aspect of the present invention, an image apparatus comprises a light source, an optical modulation device, a reflector and a control unit. The optical modulation device is operable to receive beams from the light source and to modulates the received beam into image components. Preferably the reflector is operable to receive the image components from the optical modulation device and to scan the received image components onto a screen. Preferably the control unit is operable to control the light source to output beams of one or two colors among three primary colors in a corresponding pixel section of a first scan section. The control unit is also operable to control the light source to output a beam or beams of the remaining color or colors among the three primary colors in a corresponding pixel section of a second scan section to generate each pixel image in two scan sections to generate an entire image composed of a plurality of pixel images.

The control unit may be further operable to control the optical modulation device to modulate an output beam using pixel information corresponding to a color of the output beam in the pixel section.

An optical transformation device may be further interposed between the light source and the optical modulation device and operable to transform the beams output from the light source so that it is uniformly irradiated to the optical modulation device.

The reflector may comprise a reflection device and a driver. The reflection device may be operable to reflect an image output from the optical modulation device and the driver may be operable to rotate the reflection device at a constant angular speed in a scan section.

According to another aspect of the present invention, an image output method used by an image apparatus is provided. Beams are output from a light source in two scan sections to generate an entire image composed of a plurality of pixel images. Preferably the beams output from the light source are modulated into image components. Preferably the image components are scanned onto a screen, wherein beams of one or two colors among three primary colors in a corresponding pixel section of a first scan section are output and a beam or beams of the remaining color or colors among the three primary colors in a corresponding pixel section of a second scan section are output to generate each pixel image.

Preferably the beams are modulated by modulating an output beam using pixel information corresponding to a color of the output beam in the pixel section.

Other objects, advantages, and salient features of the invention will become apparent to those skilled in the art from the following detailed descriptions, which, taken in conjunction with the annexed drawings, discloses exemplary embodiments of the invention.

For a better understanding of the invention, and to show how embodiments of the same may be carried into effect, reference will now be made, by way of example, to the accompanying diagrammatic drawings in which:
FIG. 1 illustrates the configuration of a conventional laser image apparatus;
FIG. 2 illustrates an output of a conventional light source using a time division method over a certain time period;
FIG. 3 illustrates an output of a conventional light source using a space division method over a certain time period;
FIG. 4A illustrates an output of a light source over a certain time period according to a first exemplary embodiment of the present invention;
FIG. 4B illustrates an output of a light source over a certain time period according to a second exemplary embodiment of the present invention;
FIG. 5 illustrates the configuration of a light source according to an exemplary embodiment of the present invention;
FIG. 6 illustrates an image apparatus including the light source according to an exemplary embodiment of the present invention;
Figure 7 illustrates the detailed operation of an optical modulation device .
FIG. 8A illustrates a screen after beams are irradiated thereto in a first scan section and FIG. 8B illustrates the screen after beams are irradiated thereto in a second scan section, in accordance with an exemplary embodiment of the present invention;
FIG. 9A illustrates a waveform of an irradiated beam whose intensity varies according to a position in a first scanning operation according to an exemplary embodiment of the present invention;
FIG. 9B illustrates a waveform of the irradiated beam whose intensity varies according to a position in a second scanning operation according to an exemplary embodiment of the present invention; and
FIG. 9C illustrates the brightness of the screen after the first and second scanning operations are performed according to an exemplary embodiment of the present invention.

Throughout the drawings, the same drawing reference numerals will be understood to refer to the same elements, features and structures.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

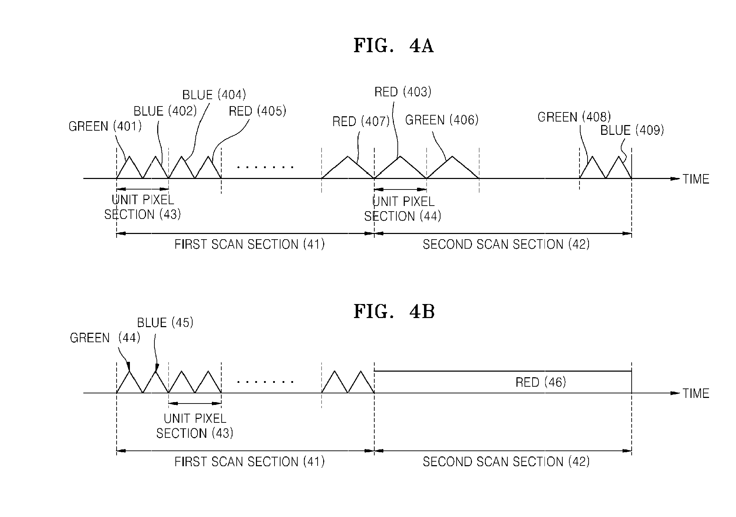

Referring to FIG. 4A, beams must be output from the light source during first and second scan sections 41 and 42 to create one entire screen image according to the exemplary embodiment of the present invention. A scan section includes an equal number of unit pixel sections 43 and horizontal or vertical pixels. To create an image of a pixel, three primary color beams must be supplied from a light source at least once in a combination of two corresponding unit pixel sections 43 and 44. In the case of a first pixel, if a green beam 401 and a blue beam 402 are supplied from the light source in the corresponding pixel section 43 of the first scan section 41, a beam of the remaining color in the three primary colors, that is, a red beam 403, must be supplied from the light source in the corresponding unit pixel section 44 of the second scan section 42. Beams of colors other than red may also be included. In the case of a second pixel, since a blue beam 404 and a red beam 405 were supplied from the light source in a corresponding unit pixel section of the first scan section 41, a green beam 406 must be supplied in a corresponding unit pixel section of the second scan section 42. If only a red beam 407 is supplied in a corresponding unit pixel section of the first scan section 41, a green beam 408 and a blue beam 409 must be supplied in a corresponding unit pixel section of the second scan section 42.

Since the maximum instantaneous power output from a red beam tends to be lower than that output from other color beams, the red beam can be irradiated for a sufficiently long period of time. If the light source is controlled to supply blue and green beams in a pixel section and then the red beam in a corresponding pixel section, the maximum instantaneous power output from a red beam tends to be lower than that output from other color beams. Consequently, the red beam may have equal brightness compared to other color beams. Alternatively, a pixel section may be filled with a beam of another color.

FIG. 4B illustrates an output waveform according to another exemplary embodiment of the present invention. Referring to FIG. 4B, a green beam and a blue beam 45 are alternately output from the light source in a unit pixel section 43 of a first scan section 41. A red beam 46 is also output in a second scan section 42. The second exemplary embodiment of the present invention illustrated in FIG. 4B can be implemented when it is relatively simple to drive the light source. Beams output from the light source may have different duration and various waveforms different from the two waveforms described above.

When these other waveforms are used, time intervals, are significantly reduced compared to the time intervals in a conventional time division method. Three color beams for forming an image are irradiated at the time intervals. The reduction in time intervals reduces a rainbow phenomenon. Green and blue are closer to each other than to red in a color coordinate system. Therefore, a color separation phenomenon visually perceived by a user in a pixel is far less apparent than when three primary colors are included in the same scan section if green and blue are included in one scan section according to the exemplary embodiment of the present invention.

If an image apparatus, according to exemplary embodiment of the present invention, can scan 30 image frames per second in a progressive manner, two scan sections are required to create one image frame. Hence, a unit scan section is approximately 60 Hz. Also, the unit pixel section may be approximately 76.8 KHz if the image apparatus performs a scanning operation in a horizontal direction and the horizontal resolution is 1280. However, such a value of the unit pixel section may vary according to the number of images per second, a scanning direction and resolution.

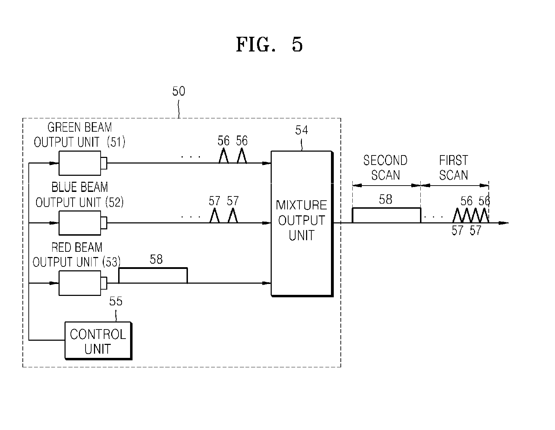

FIG. 5 illustrates the configuration of a light source 50 outputting the waveform of FIG. 4 according to an exemplary embodiment of the present invention. Referring to FIG. 5, the light source 50 includes a green beam output unit 51, a blue beam output unit 52, and a red beam output unit 53. The green, blue, and red beam output units 51, 52 and 53 output optical signals 56, 57 and 58, respectively, under the control of a control unit 55. A mixture output unit 54 sequentially mixes the optical signals 56, 57 and 58 output from the green, blue, and red beam output units 51, 52 and 53. The mixture output unit 54 also outputs the mixed optical signal. The mixed optical signal output from the mixture output unit 54 has the waveform of FIG. 4. The mixture output unit 54 may be a lens, a mirror, a splitter, or a switch device (not shown). The light source 50 may be a laser light source or any device that can generate short pulses. In FIG. 5, green and blue beams of triangle waves are mixed in a first scan section, and a red beam of square waves is generated in a second scan section. However, the three color beams may have various waveforms as illustrated in FIG. 4.

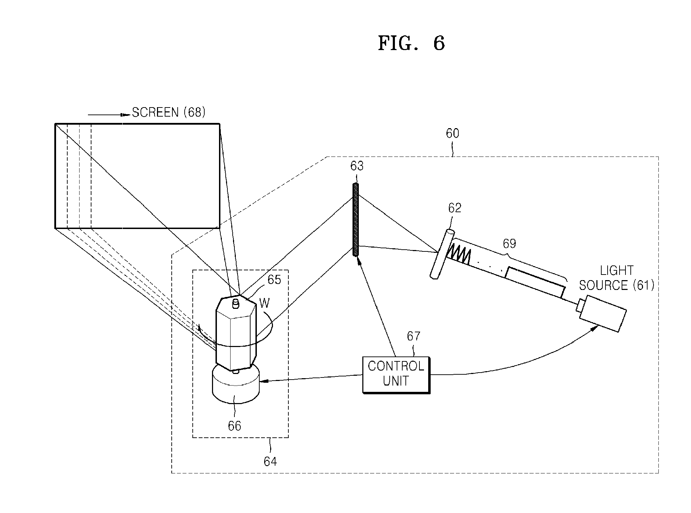

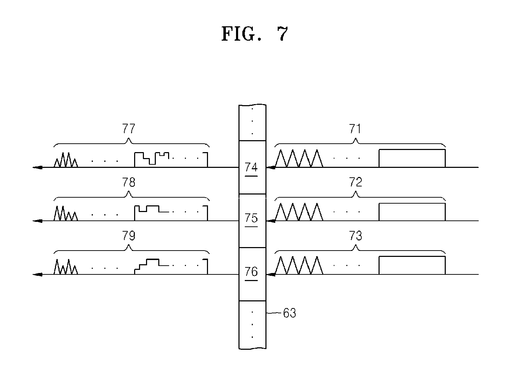

FIG. 6 illustrates an image apparatus 60 including the light source according to an exemplary embodiment of the present invention. A laser beam 69 output from the light source 61 passes through a first lens 62 which transforms light so that the light is uniformly irradiated to an optical modulation device 63. If the optical modulation device 63 has a linear shape, the first lens 62 transforms light into the linear shape. If the optical modulation device 63 has another shape, the first lens 62 transforms light accordingly. The detailed operation of the optical modulation device 63 of FIG. 6 is illustrated in FIG. 7. Optical outputs 71, 72 and 73 input respectively to pixels 74, 75 and 76 of the optical modulation device 63 have identical waveforms. Since operating signals of the pixels 74, 75 and 76 are different, the input beams 71, 72 and 73 are modulated by the pixels 74, 75 and 76 into image components of the beams 77, 78 and 79 that have different waveforms. Image components denote three primary color components required to express an image. A major optical modulation device is a digital micromirror device (DMD). A line-type optical modulation device is used more widely than a square device which includes all pixels of a two-dimensional image. According to an exemplary implementation, the line-type optical modulation device is composed of pixels in a line and drives differently over a certain time period. The image components modulated by the optical modulation device 63 are scanned by a reflector 64 onto a screen 68. The reflector 64 includes a reflection device 65 and a driver 66 rotating the reflection device 65 at a constant angular speed w for at least a scan section. The reflection device 65 may have a variety of shapes. For example, the reflection device 65 may have a hexagonal shape as illustrated in FIG. 6 or a plate shape as illustrated in FIG. 1. The reflection device 65 is driven to irradiate the image components from one end of the screen 68 to the other and then to scan the image components from the one end of the screen 68. A control unit 67 controls an output signal of the light source 61, the rotation is performed by the driver 66, and a modulated signal of the optical modulation device 63. The light source 61 is controlled to output a beam by distributing three primary color beams appropriately for each pixel section according to the process described with reference to FIG. 4. The optical modulation device 63 also receives a modulated signal according to a color of an input beam. In addition, the rotation of the reflector 64 is controlled so that the image components modulated by the optical modulation device 63 can be irradiated to corresponding positions of the screen 68. A scanning direction may be horizontal as in FIG. 6 or vertical (not shown). The laser image apparatus, according to an exemplary embodiment of the present invention, may include a projector which does not include a screen as an element and a television (TV) which does include a screen as an element.

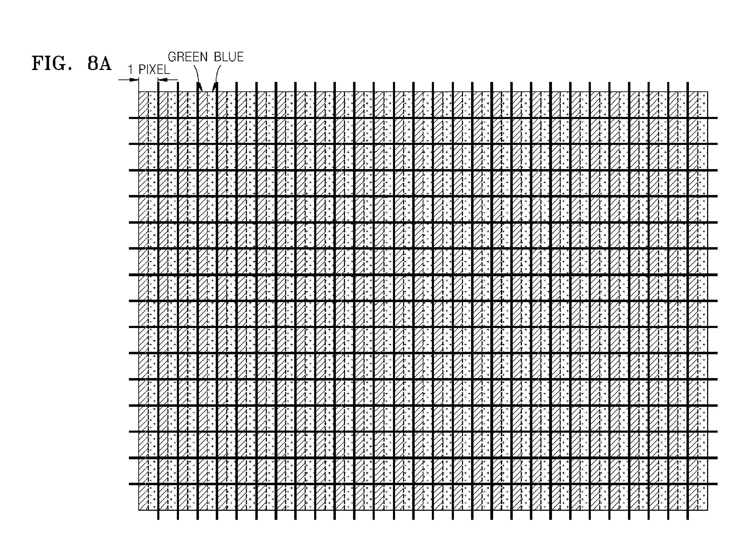

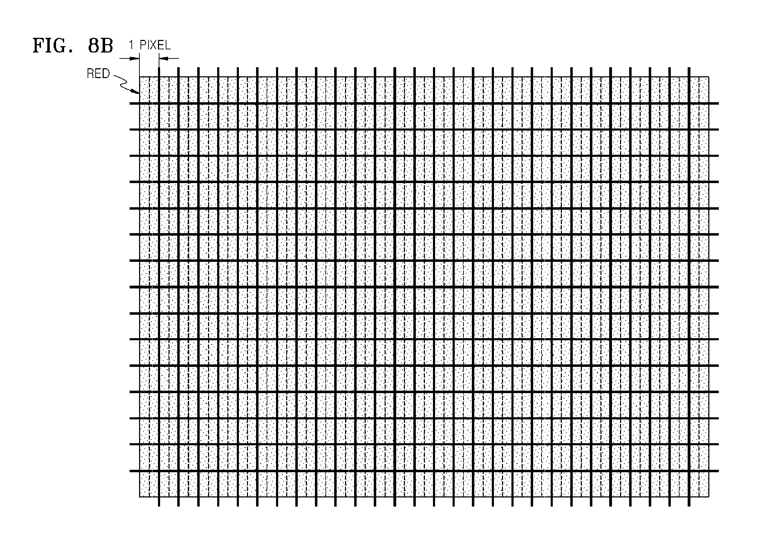

FIGS. 8A and 8B illustrate screens after color beams are irradiated thereto in each scan section. Referring to FIGS. 8A and 8B, green and blue beams were irradiated to unit pixels in a first scan section, and a red beam was irradiated to the unit pixels in a second scan section. Consequently, a user perceives the two screens as being combined due to an afterimage effect.

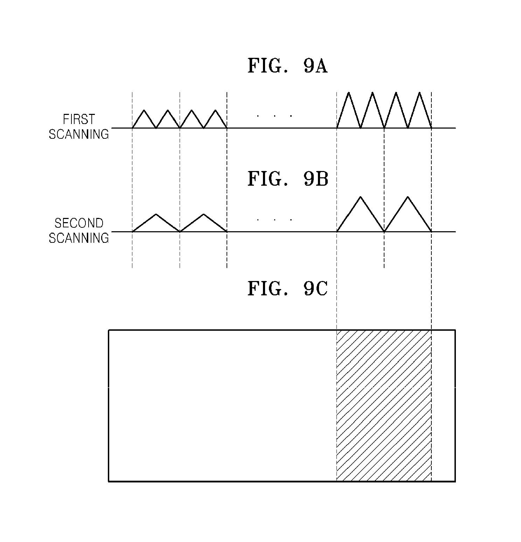

FIG. 9 illustrates a case in which local dimming is supported by varying the intensity of an optical output for each section of a screen. In this case, the intensity of an optical output of a pixel section is controlled. The pixel section corresponds to a portion which has a different brightness.

An exemplary embodiment of the present invention may significantly reduce time intervals at which three color beams of an image are irradiated compared with the conventional time division method, thereby reducing the rainbow phenomenon. Also, an exemplary embodiment of the present invention may have a far less apparent color separation phenomenon in a pixel than the conventional space division method in which three colors are output in the same scan section. Furthermore, an exemplary embodiment of the present invention can increase a scan time of a particular beam without increasing the color separation phenomenon in a pixel and reduce a dimming effect in each area of an image.

An exemplary embodiment of the present invention can also be implemented as computer-readable code on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, and carrier waves (such as data transmission through the Internet via wired or wireless transmission paths).

The computer-readable recording medium can also be distributed over network-coupled computer systems so that the computer-readable code is stored and executed in a distributed fashion. Also, functional programs, code, and code segments for accomplishing the present invention can be easily construed as within the scope of the invention by programmers skilled in the art to which the present invention pertains.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of outputting beams from a light source, the method comprising:
outputting beams in two scan sections (41,42) to generate an entire image composed of a plurality of pixel images; and
outputting beams of at least one and two colors (401,402) among three primary colors in a corresponding pixel section (43/44) of a first scan section (41) and outputting at least one beam (403) of the remaining color or colors among the three primary colors in a corresponding pixel section (43/44) of a second scan section (42) to generate each pixel image.

2. The method of claim 1, wherein a red beam is output in one of the two pixel sections (43/44).

3. The method of claim 1, wherein the intensity of the beams may vary according to each pixel section (43/44).

4. A light source outputting beams of three primary colors, the light source comprising:
a first color beam output unit (51);
a second color beam output unit (52);
a third color beam output unit (53);
a mixture output unit (54) for combining beams output respectively from the first through third color beam output units (51-53) into one combined beam and for outputting the combined beam; and
a control unit (55) for controlling the first through third color beam output units and the mixture output unit (54) to output beams of at least one and two colors among the three primary colors in a corresponding pixel section (43/44) of a first scan section (41) and to output at least one beam of the remaining color or colors among the three primary colors in a corresponding pixel section (43/44) of a second scan section (42) to generate each pixel image in two scan sections (41,42) for generating an entire image composed of a plurality of pixel images.

5. The light source of claim 4, wherein the control unit (55) is operable to control the first through third color beam output units and the mixture output unit (54) to output a red beam in one of the two pixel sections (43, 44) .

6. The light source of claim 4 or claim 5, wherein the intensity of the beams may vary according to each pixel section (43/44).

7. The light source of any one of claims 4 to 6, wherein the mixture output unit (54) comprises a switch device for selecting one of the first through third color beam output units.

8. An image apparatus comprising:
a light source (61);
an optical modulation device (63) for receiving beams from the light source (61) and for modulating the received beam into image components;
a reflector (64) for receiving the image components from the optical modulation device (63) and for scanning the received image components onto a screen (68); and
a control unit (55) for controlling the light source (61) to output beams of at least one and two colors among three primary colors in a corresponding pixel section (43/44) of a first scan section (41), and to output at least one beam of the remaining color or colors among the three primary colors in a corresponding pixel section (43/44) of a second scan section (42) to generate each pixel image in two scan sections (41,42) for generating an entire image composed of a plurality of pixel images.

9. The apparatus of claim 8, wherein the control unit (55) is further operable to control the optical modulation device (63) to modulate an output beam using pixel information corresponding to a color of the output beam in the pixel section (43/44).

10. The apparatus of claim 8 or claim 9, further comprising an optical transformation device interposed between the light source (61) and the optical modulation device (63) operable to transform the beams output from the light source (61) so as to be uniformly irradiated to the optical modulation device (63).

11. The apparatus of any one of claims 8 to 10, wherein the reflector (64) comprises:
a reflection device (65) for reflecting an image output from the optical modulation device (63); and
a driver for rotating the reflection device (65) at a constant angular speed in a scan section.

12. The apparatus of any one of claims 8 to 11, wherein the control unit (55) is operable to control the light source (61) to output a red beam in one of the two pixel sections (43,44).

13. The apparatus of any one of claims 8 to 12, wherein the intensity of the beams may vary according to each pixel section (43/44).

14. An image output method used by an image apparatus, the method comprising:
outputting beams from a light source (61) in two scan sections (41,42) to generate an entire image composed of a plurality of pixel images; and
modulating the beams output from the light source (61) into image components;
scanning the image components onto a screen (68),
wherein the outputting of the beams comprises:
outputting beams of at least one and two colors among three primary colors in a corresponding pixel section (43/44) of a first scan section (41) and outputting at least one beam of the remaining color or colors among the three primary colors in a corresponding pixel section (43/44) of a second scan section (42) to generate each pixel image.

15. The method of claim 14, wherein the modulating of the beams comprises modulating an output beam using pixel information corresponding to a color of the output beam in the pixel section (43/44).

16. The method of claim 14 or claim 15, further comprising transforming the beams output from the light source (61) so as to be uniformly irradiated to an optical modulation device (63).

17. The method of any one of claims 14 to 16, wherein the scanning of the image components further comprises rotating a reflection device at constant angular speed in a scan section.

18. The method of any one of claims 14 to 17, wherein a red beam is output in one of the two pixel sections (43,44).

19. The method of any one of claims 14 to 18, wherein the intensity of the beams may vary according to each pixel section (43/44).

20. A light source for outputting beams of primary colors, the light source comprising:
a mixture output unit (54) for combining beams output from color beam output units into one combined beam and outputting the combined beam; and
a control unit (55) for controlling color beam output units and the mixture output unit (54) to output beams of colors among primary colors in a corresponding pixel section (43/44) of a first scan section (41) and to output at least one beam of the remaining colors among primary colors in a corresponding pixel section (43/44) of a second scan section (42) to generate each pixel image in two scan sections (41,42) for generating an entire image composed of a plurality of pixel images.

21. An image apparatus comprising:
an optical modulation device (63) for receiving beams from a light source (61) and for modulating the received beam into image components; and
a reflector (64) for receiving the image components from the optical modulation device (63) and for scanning the received image components onto a screen (68).

22. The apparatus of claim 21, wherein the image apparatus further comprises a control unit (55) for controlling the light source (61) to output beams of at least one and two colors among three primary colors in a corresponding pixel section (43/44) of a first scan section (41), and to output at least one beam of the remaining color or colors among the three primary colors in a corresponding pixel section (43/44) of a second scan section (42) to generate each pixel image in two scan sections (41,42) for generating an entire image composed of a plurality of pixel images.

23. A computer readable medium having stored thereon instructions for executing a method of outputting beams from a light source (61), the instructions comprising:
a first set of instructions for outputting beams in two scan sections (41,42) to generate an entire image composed of a plurality of pixel images; and a second set of instructions for outputting beams of at least one and two colors among three primary colors in a corresponding pixel section (43/44) of a first scan section (41) and outputting at least one beam or beams of the remaining color or colors among the three primary colors in a corresponding pixel section (43/44) of a second scan section (42) to generate each pixel image.

24. The computer readable medium of claim 23, wherein a red beam is output in one of the two pixel sections (43,44).

25. The computer readable medium of claim 23 or claim 24, wherein the intensity of the beams may vary according to each pixel section (43/44).

26. A computer readable medium having stored thereon instructions for executing a method of outputting images used by an image apparatus, the instructions comprising:
a first set of instructions for outputting beams from a light source (61) in two scan sections (41,42) to generate an entire image composed of a plurality of pixel images; and
a second set of instructions for modulating the beams output from the light source (61) into image components;
a third set of instructions for scanning the image components onto a screen (68),
wherein the outputting of the beams comprises:
outputting beams of at least one and two colors among three primary colors in a corresponding pixel section (43/44) of a first scan section (41) and outputting at least one beam of the remaining color or colors among the three primary colors in a corresponding pixel section (43/44) of a second scan section (42) to generate each pixel image.
